# EUROPEAN PATENT SPECIFICATION

(11) **EP 4 101 547 B1**
(45) Date of publication and mention of the grant of the patent: **22.04.2026**
(21) Application number: 21892240.9
(22) Date of filing: 04.11.2021
(51) Int. Cl.: B05C 5/02, H01M 4/04, B05D 1/26, B05C 9/14

(54) **ELECTRODE COATING APPARATUS AND ELECTRODE COATING METHOD**
ELEKTRODENBESCHICHTUNGSVORRICHTUNG UND ELEKTRODENBESCHICHTUNGSVERFAHREN
DISPOSITIF DE REVÊTEMENT D'ÉLECTRODE ET PROCÉDÉ DE REVÊTEMENT D'ÉLECTRODE

(30) Priority: 10.11.2020 KR 20200149164
(43) Date of publication of application: 14.12.2022
(73) Proprietor: LG Energy Solution, Ltd., Seoul 07335 (KR)
(72) Inventor: SHIN, Jin Hwan, Daejeon 34122 (KR); CHOY, Sang Hoon, Daejeon 34122 (KR); JEON, Shin Wook, Daejeon 34122 (KR); KO, Young Kuk, Daejeon 34122 (KR)
(74) Representative: Plasseraud IP
(86) International application number: PCT/KR2021/015920
(87) International publication number: WO 2022/103072

(56) References cited:
- WO-A1-2015/053158
- DE-A1- 102012 224 228
- JP-A- 2000 353 515
- JP-A- 2014 160 048
- JP-A- 2015 013 248
- JP-A- 2015 013 248
- JP-B2- 6 344 313
- KR-A- 20150 061 593
- KR-B1- 101 243 573
- US-A1- 2016 111 708

## Description

### [Technical Field]

This application claims the benefit of priority based on Korean Patent Application No. 10-2020-0149164, filed on November 10, 2020.

The present invention relates to an electrode coating apparatus and an electrode coating method.

### [Background Art]

Recently, secondary batteries capable of charging and discharging have been widely used as energy sources of wireless mobile devices. In addition, the secondary battery has attracted attention as an energy source of an electric vehicle, a hybrid electric vehicle, etc., which are proposed as a solution for air pollution of existing gasoline vehicles and diesel vehicles using fossil fuel. Therefore, the types of applications using the secondary battery are currently much diversified due to the advantages of the secondary battery, and it is expected that the secondary battery will be applied to many fields and products in the future.

Such secondary batteries may be classified into lithium ion batteries, lithium ion polymer batteries, lithium polymer batteries, etc., depending on the composition of the electrode and the electrolyte, and among them, the amount of use of lithium-ion polymer batteries that are less likely to leak electrolyte and are easy to manufacture is on the increase. In general, secondary batteries are classified into cylindrical batteries and prismatic batteries in which an electrode assembly is embedded in a cylindrical or rectangular metal can, depending on the shape of a battery case, and pouch-type batteries in which the electrode assembly is embedded in a pouch-type case of an aluminum laminate sheet. The electrode assembly built into the battery case is composed of a positive electrode, a negative electrode, and a separator interposed between the positive electrode and the negative electrode, and is a power generating element capable of charging and discharging. The electrode assembly is classified into a jelly-roll type wound with a separator interposed between the positive electrode and the negative electrode which are long sheet-shaped and are coated with active materials, and a stack type in which a plurality of positive electrodes and negative electrodes of a predetermined size are sequentially stacked while a separator is interposed there between.

The positive electrode and the negative electrode are formed by applying a positive electrode slurry containing a positive electrode active material and a negative electrode slurry containing a negative electrode active material to a positive electrode current collector and a negative electrode current collector, followed by drying and rolling them. At this time, the positive electrode slurry and the negative electrode slurry are generally coated in a die coating scheme.

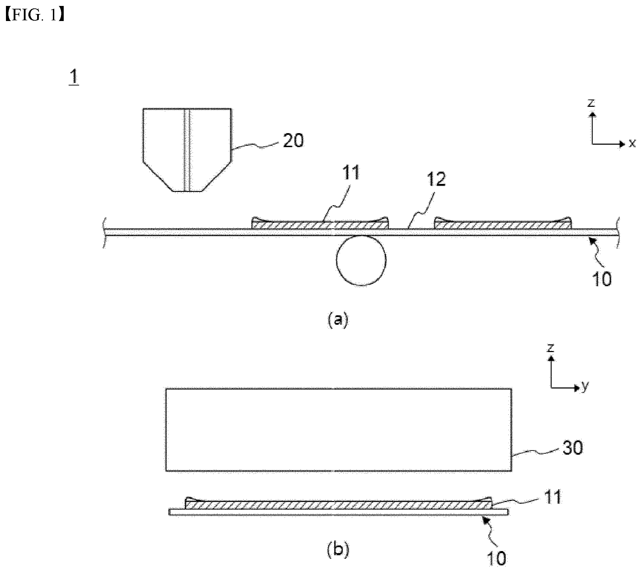

FIG. 1 is a schematic diagram showing a general electrode coating apparatus.

Referring to FIG. 1, a conventional electrode coating apparatus 1 includes a coating die 20. An electrode slurry is discharged from the coating die 20 and is coated on a current collector 10. At this time, the coating die 20 has a slit-shaped discharge port in a width direction of the current collector 10 so that the electrode slurry can be discharged. As the current collector 10 is moved in one direction, the electrode slurry is consecutively coated or pattern-coated on the current collector 10, thereby forming a coated part 11, on which an electrode slurry has been coated, or a non-coated part 12, on which the electrode slurry has not been coated. At this time, in order for the electrode to show the maximum performance, a lot of electrode active materials should be contained in a small space, and in order to enhance the charge and discharge efficiency with the same amount of active materials, the electrode slurry should be coated in the uniform thickness. Particularly, as the size of the coating die increases and the speed of the coating process increases in order to implement high quality and high efficiency products and enhance production efficiency, it has become more important for the amount of coating liquid discharged from the coating die to be constant throughout the entire coating die in the width direction.

However, the thickness of the center portion of the coated electrode slurry and the thickness of the edge portion of the electrode slurry become non-uniform due to the difference in the discharge pressure inside the coating die. Specifically, the thickness of the coated part at the coating start point may increase in the process in which the electrode slurry inside the coating die is discharged at the time of coating start as shown in FIG. 1(a). Further, the thickness at both ends in the width direction of the coated part may more increase than the central portion due to the difference in the discharge pressure of the central portion and the discharge pressure of both ends of the coating die as shown in FIG. 1(b). This may interfere with implementation of a high quality electrode.

In the past, the defect was detected by measuring the weight of the electrode with respect to the coating quality of the electrode. As such, there was no method for managing the thickness defect of the edge portion of the coated electrode slurry.

Hence, there is a need for a technology for measuring the thickness of the edge portion of the coated electrode slurry and controlling the thickness of the portion.

JP 2015 013248 A, JP 2014 16 0048 A and DE 10 2012 224228 disclose an electrode coating apparatus having a thickness measuring sensor.

### [Disclosure]

### [Technical Problem]

The present invention is believed to solve at least some of the above problems. For example, an aspect of the present invention provides an electrode coating apparatus and method for measuring the thickness of the electrode slurry, particularly the thickness of the edge portion in real time, and controlling the coated amount of the electrode slurry according to the measurement result.

### [Technical Solution]

An electrode coating apparatus according to the present invention is define in the appended set of claims, the electrode coating apparatus includes: a coating die which coats an electrode slurry on one surface of a current collector; a thickness measuring sensor which is positioned to be spaced apart from the current collector by a predetermined interval and measures a thickness of the coated electrode slurry in real time; and a controller which controls a coated amount of the electrode slurry in real time according to a result of measuring the thickness.

According to the invention, the thickness measuring sensor measures a thickness of an edge portion of the coated electrode slurry.

According to the present invention, the coating diepattern-coat the electrode slurry to allow a non-coated part and a coated part to be alternately formed along a coating direction.

At this time, the thickness measuring sensor is fixed at a central portion in a width direction of the current collector and measure a thickness of both edge portions (balcony portion) in the coating direction of the coated part.

In another example, the coating die may consecutively coat the electrode slurry to allow a coated part to be consecutively formed along a coating direction.

At this time, the thickness measuring sensor may measure a thickness of both edge portions (Fat Edge) in a width direction of the coated part while reciprocating in the width direction.

In further another example, the apparatus may further include a drying unit which dries the coated electrode slurry.

At this time, the thickness measuring sensor may be positioned at a coating start point and an exit point of the drying unit.

According to the invention, the thickness measuring sensor is a confocal sensor.

In a specific example, the controller may control a discharge pressure of the coating die.

Further, the present invention provides an electrode coating method as defined in the appended set of claims. The method includes: preparing the above-described electrode coating apparatus; coating an electrode slurry on a current collector using a coating die; measuring a thickness of the coated electrode slurry in real time using a thickness measuring sensor; and controlling a coated amount of the electrode slurry in real time according to a result of measuring the thickness using a controller.

According to the invention, the thickness measuring sensor measures a thickness of an edge portion of the coated electrode slurry.

According to the present invention, the electrode slurry is pattern-coated to allow a non-coated part and a coated part to be alternately formed along a coating direction.

Herein, the thickness measuring sensor is fixed at a central portion in a width direction of the current collector and measures a thickness of a balcony portion which repeatedly shown according to movement of the current collector.

In another example, the electrode slurry is consecutively coated along a coating direction.

Herein, the thickness measuring sensor may measure a thickness of both edge portions in a width direction of the coated electrode slurry while reciprocating in the width direction.

In a specific example, the coated amount of the electrode slurry may be controlled by adjustment of a discharge pressure of the coating die.

### [Advantageous Effects]

According to the present invention, it is possible to recognize the thickness distribution of the electrode slurry in real time by measuring the thickness of the edge portion of the coated electrode slurry using the thickness measuring sensor on the transferred current collector, and accordingly, the thickness of the electrode slurry can be formed to be constant by adjusting the coated amount of the electrode slurry in real time.

### [Brief Description of the Drawings]

FIG. 1 is a schematic diagram showing a general electrode coating apparatus.
FIG. 2 is a block diagram showing a configuration of an electrode coating apparatus according to the present invention.
FIGS. 3 to 5 are schematic diagrams illustrating an electrode coating apparatus according to an embodiment of the present invention.
FIGS. 6 to 8 are schematic diagrams illustrating an electrode coating apparatus according to the present disclosure.
FIG. 9 is a schematic diagram illustrating an electrode coating apparatus according to another embodiment of the present invention.
FIG. 10 is a flowchart illustrating the order of an electrode coating method according to the present invention.
FIGS. 11 and 12 are graphs showing the thickness measurement results of an electrode slurry according to an embodiment of the present invention.

### [Detailed Description of the Preferred Embodiments]

Hereinafter, the present invention will be described in detail with reference to the drawings. The terms and words used in the present specification and claims should not be construed as limited to ordinary or dictionary terms and the inventor may properly define the concept of the terms in order to best describe its invention. The terms and words should be construed as meaning and concept consistent with the technical idea of the present invention.

In this application, it should be understood that terms such as "include" or "have" are intended to indicate that there is a feature, number, step, operation, component, part, or a combination thereof described on the specification, and they do not exclude in advance the possibility of the presence or addition of one or more other features or numbers, steps, operations, components, parts or combinations thereof. Also, when a portion such as a layer, a film, an area, a plate, etc. is referred to as being "on" another portion, this includes not only the case where the portion is "directly on" the another portion but also the case where further another portion is interposed therebetween. On the other hand, when a portion such as a layer, a film, an area, a plate, etc. is referred to as being "under" another portion, this includes not only the case where the portion is "directly under" the another portion but also the case where further another portion is interposed therebetween. In addition, to be disposed "on" in the present application may include the case disposed at the bottom as well as the top.

In the present invention, the transfer direction of the current collector is a direction in which the electrode slurry is coated and means a direction (x-axis direction) in which the current collector is transferred. Further, the width direction is a direction indicated by the width of the current collector, and means a direction (y-axis direction) perpendicular to the direction in which the current collector is transferred on the plane represented by the current collector.

Hereinafter, the present invention will be described in detail with reference to the drawings.

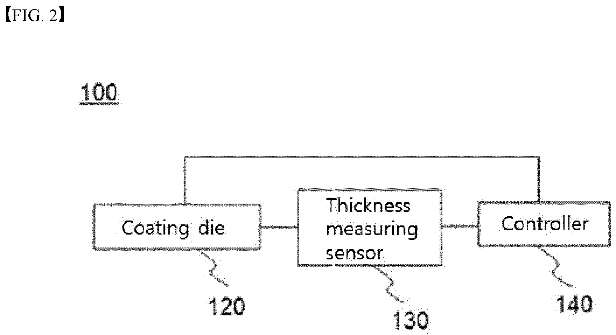

FIG. 2 is a block diagram showing a configuration of an electrode coating apparatus according to the present invention.

Referring to FIG. 2, an electrode coating apparatus 100 according to the present invention includes: a coating die 120 which coats an electrode slurry on one surface of a current collector; a thickness measuring sensor 130 which is positioned to be spaced apart from the current collector by a predetermined interval and measures a thickness of the coated electrode slurry in real time; and a controller 140 which controls a coated amount of the electrode slurry in real time according to a result of measuring the thickness.

As described above, the thickness of the center portion of the coated electrode slurry and the thickness of the edge portion of the electrode slurry become non-uniform due to the difference in the discharge pressure inside the coating die, thereby deteriorating the quality of the electrode.

According to the present invention, it is possible to recognize the thickness distribution of the electrode slurry in real time by measuring the thickness of the edge portion of the coated electrode slurry using the thickness measuring sensor on the transferred current collector, and accordingly, the thickness of the electrode slurry can be formed to be constant by adjusting the coated amount of the electrode slurry in real time.

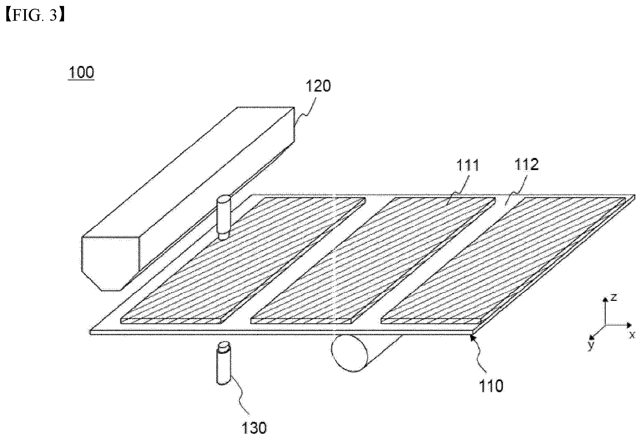

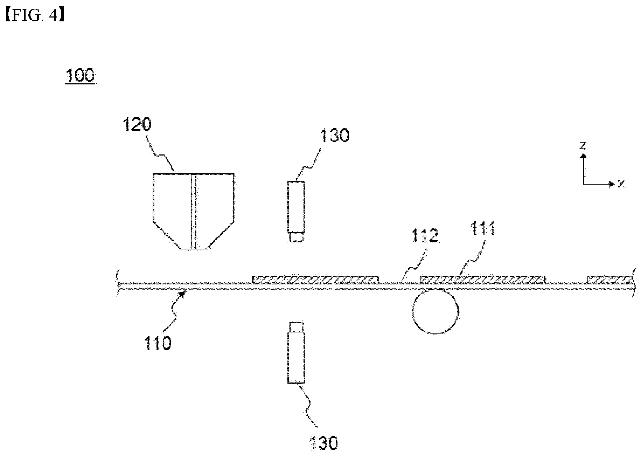

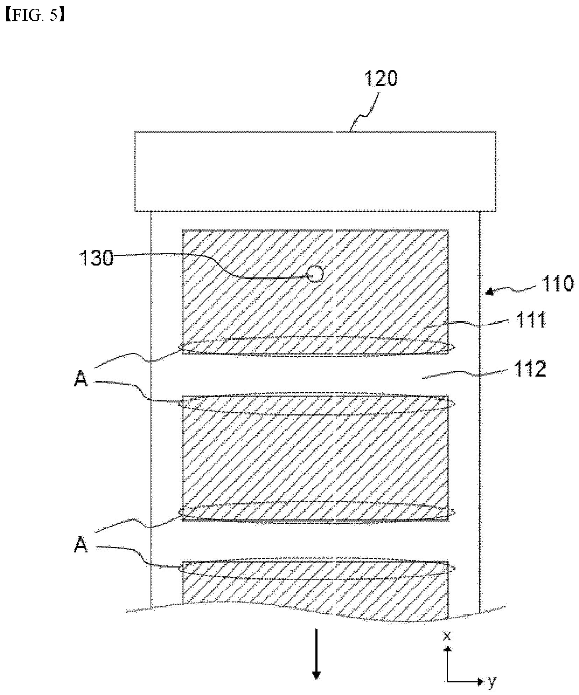

FIGS. 3 to 5 are schematic diagrams illustrating an electrode coating apparatus according to an embodiment of the present invention. FIG. 4 is a side view of FIG. 3, and FIG. 5 is a top view of FIG. 3.

When referring to FIGS. 3 to 5 together with FIG. 2, an electrode coating apparatus 100 according to the present invention includes a coating die 120 for coating an electrode slurry on one surface of a current collector 110. The coating die 120 may be positioned to be spaced apart from the current collector 110 by a predetermined distance. The coating die 120 may pattern-coat an electrode slurry on the current collector 110 as will be described later.

The coating die 120 may include a main body and a tip coupled to the main body. Specifically, a discharge path, on which the supplied electrode slurry may be moved, may be formed in the main body, and a discharge port, through which the electrode slurry is discharged, may be formed at the end of the tip. The discharge port may have a slit shape extended in the width direction along the end of the tip, and the thickness may be adjusted according to the thickness of the electrode slurry coated on the current collector. Further, the electrode slurry is stored in a separate slurry supply tank (not shown), and the electrode slurry may be supplied to the coating die through a supply pipe (not shown) connected to the coating die.

Further, if a coating process is started in a state that the current collector 110 is wound on a separate unwinding roll (not shown), the electrode slurry is coated while moving along a predetermined path.

The current collector 110 may be positive electrode current collector or a negative electrode current collector, and the electrode slurry may contain an electrode active material. The electrode active material may be a positive electrode active material or a negative electrode active material. The electrode slurry may further contain a conductive material and a binder, and may be what is obtained by dispersing an electrode active material, a conductive material and a binder in a solvent.

In the present invention, the positive electrode current collector generally has a thickness of 3 to 500 micrometers. The positive electrode current collector is not particularly limited as long as it has high conductivity without causing a chemical change in the battery. Examples of the positive electrode current collector include stainless steel, aluminum, nickel, titanium, sintered carbon or aluminum or stainless steel of which the surface has been treated with carbon, nickel, titanium, silver, or the like. The current collector may have fine irregularities on the surface thereof to increase the adhesion of the positive electrode active material, and various forms such as a film, a sheet, a foil, a net, a porous body, a foam, and a nonwoven fabric are possible.

The negative electrode current collector generally has a thickness of 3 to 500 micrometers. The negative electrode current collector is not particularly limited as long as it has electrical conductivity without causing chemical changes in the battery, and examples thereof include copper, stainless steel, aluminum, nickel, titanium, sintered carbon, copper or stainless steel of which the surface has been treated with carbon, nickel, titanium, silver or the like, aluminum-cadmium alloy, or the like. In addition, like the positive electrode current collector, fine unevenness can be formed on the surface to enhance the bonding force of the negative electrode active material, and it can be used in various forms such as a film, a sheet, a foil, a net, a porous body, a foam, and a nonwoven fabric.

In the present invention, the positive electrode active material is a material capable of causing an electrochemical reaction and a lithium transition metal oxide, and contains two or more transition metals. Examples thereof include: layered compounds such as lithium cobalt oxide (LiCoO₂) and lithium nickel oxide (LiNiO₂) substituted with one or more transition metals; lithium manganese oxide substituted with one or more transition metals; lithium nickel oxide represented by the formula LiNi_{1-y}M_{y}O₂ (wherein M = Co, Mn, Al, Cu, Fe, Mg, B, Cr, Zn or Ga and contains at least one of the above elements, 0.01 ≦ y ≦ 0.7); lithium nickel cobalt manganese composite oxide represented by the formula Li_{1+z}Ni_{b}Mn_{c}Co_{1-(b+c+d)}M_{d}O₍₂₋ₑ₎Aₑ such as Li_{1+z}Ni_{1/3}Co_{1/3}Mn_{1/3}O₂, Li_{1+z}Ni_{0.4}Mn_{0.4}Co_{0.2}O₂ etc. (wherein - 0.5≤z≤0.5, 0.1≤b≤0.8, 0.1≤c≤0.8, 0≤d≤0.2, 0≤e≤0.2, b+c+d<1, M = Al, Mg, Cr, Ti, Si or Y, and A = F, P or Cl); olivine-based lithium metal phosphate represented by the formula Li₁₊ₓM_{1-y}M'_{y}PO_{4-z}X_{z} (wherein M = transition metal, preferably Fe, Mn, Co or Ni, M'= Al, Mg or Ti, X = F, S or N, and -0.5≤x≤0.5, 0≤y≤0.5, 0≤z≤0.1).

Examples of the negative electrode active material include carbon such as non-graphitized carbon and graphite carbon; metal complex oxide such as LiₓFe₂O₃(0≤x≤1), LiₓWO₂(0≤x≤1), SnₓMe₁₋ₓMe'_{y}O_{z} (Me: Mn, Fe, Pb, Ge; Me': Al, B, P, Si, groups 1, 2, and 3 of the periodic table, halogen; 0<x≤1; 1≤y≤3; 1≤z≤8); lithium metal; lithium alloy; silicon alloy; tin alloy; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; conductive polymers such as polyacetylene; and Li-Co-Ni-based materials.

The conductive material is usually added in an amount of 1 to 30% by weight based on the total weight of the mixture including the positive electrode active material. Such a conductive material is not particularly limited as long as it has electrical conductivity without causing a chemical change in the battery, and examples thereof include graphite such as natural graphite and artificial graphite; carbon black such as carbon black, acetylene black, Ketjen black, channel black, furnace black, lamp black, and summer black; conductive fibers such as carbon fiber and metal fiber; metal powders such as carbon fluoride, aluminum and nickel powder; conductive whiskey such as zinc oxide and potassium titanate; conductive metal oxides such as titanium oxide; and conductive materials such as polyphenylene derivatives and the like.

The binder is added in an amount of 1 to 30% by weight, on the basis of the total weight of the mixture containing the positive electrode active material, as a component that assists in bonding between the active material and the conductive material and bonding to the current collector. Examples of such binders include polyvinylidene fluoride, polyvinyl alcohol, carboxymethylcellulose (CMC), starch, hydroxypropylcellulose, regenerated cellulose, polyvinylpyrrolidone, tetrafluoroethylene, polyethylene, polypropylene, ethylenepropylene-diene terpolymer (EPDM), sulfonated EPDM, styrene butylene rubber, fluorine rubber, various copolymers and the like.

The type of the solvent is not particularly limited as long as it is capable of dispersing an electrode active material, and either an aqueous solvent or a non-aqueous solvent may be used. For example, the solvent may be a solvent generally used in the art, such as dimethyl sulfoxide (DMSO), isopropyl alcohol, N-methylpyrrolidone (NMP), acetone, or water, and one of them alone or a mixture of two or more may be used. The amount of the solvent used may be such that the slurry can be adjusted to have an appropriate viscosity in consideration of the coating thickness, production yield, and workability of the slurry, and is not particularly limited.

The thickness measuring sensor 130 is positioned to be spaced apart from the current collector 110 by a predetermined distance and measures the thickness of the coated electrode slurry, that is the thickness of the coated part 111 in real time. Particularly, the thickness measuring sensor 130 recognizes the difference in the thickness of the edge portion by measuring the edge portion of the coated electrode slurry (coated part) and comparing it with the central portion where the thickness is constantly maintained. Further, in the present invention, measuring the edge portion by the thickness measuring sensor 130 means centering on measuring the thickness of the edge portion, and it does not exclude measuring the thickness of the center portion of the coated electrode slurry. In the present invention, as the current collector 110 is moved, the thickness measuring sensor 130 measures the thickness of the coated electrode slurry (coated part) in real time, and in the process, both the thickness of the edge portion and the thickness of the central portion of the coated electrode slurry (coated part) may be measured. It is possible to calculate the thickness deviation between the two portions from result of measuring the thickness of the edge portion and the thickness of the central portion, which can be utilized in controlling the thickness deviation.

At this time, the thickness measuring sensor 130 includes a probe for measuring the thickness, and each probe may be positioned at the upper surface and the lower surface of the current collector 110 respecitvely. When a plurality of thickness measuring sensors are positioned along a width direction, the thickness measuring sensors may interfere with each other.

Specifically, the thickness measuring sensor 130 may use a different thickness measuring scheme according to the coating scheme of the electrode slurry.

Referring to FIGS. 3 to 5, the coating die 120 may pattern-coat an electrode slurry. In this case, the coating die 120 may repeat the discharge and stop of the electrode slurry during the movement of the current collector 110. Alternatively, in a state that the current collector has been stopped, it is possible to repeat the discharge and stop of the electrode slurry while the coating die is moved on the current collector. However, in the roll-to-roll process, it may be more efficient for the current collector to be moved in a state that the coating die has been stopped.

Likewise, as the coating die 120 pattern-coats the electrode slurry, a coated part 111, on which an electrode slurry has been coated along the coating direction, and a non-coated part 112, on which the electrode slurry has not been coated, are alternately formed on the current collector 110. Namely, in this case, a balcony portion A is repeatedly formed along a coating direction. Herein, the balcony portion A is a boundary portion of the coated part 111 and the non-coated part 112 which are alternately formed in the coating direction, and means the edge portion in the coating direction of the coated part (coated electrode slurry).

Likewise, when the electrode slurry is pattern-coated, the thickness measuring sensor 130 measures the thickness of the balcony portion. Specifically, the thickness measuring sensor 130 may be fixed at a central portion in a width direction of the current collector 110 and measure a thickness of both edge portions (balcony portion) in a coating direction of the coated part 111. As described above, since the portion, where the thickness of the electrode slurry coated based on the width direction of the current collector 110 is most constant, is the center portion of the current collector 110, the thickness measuring sensor 130 is positioned at the center portion of the current collector 110, where the thickness of the balcony portion can be most accurately measured.

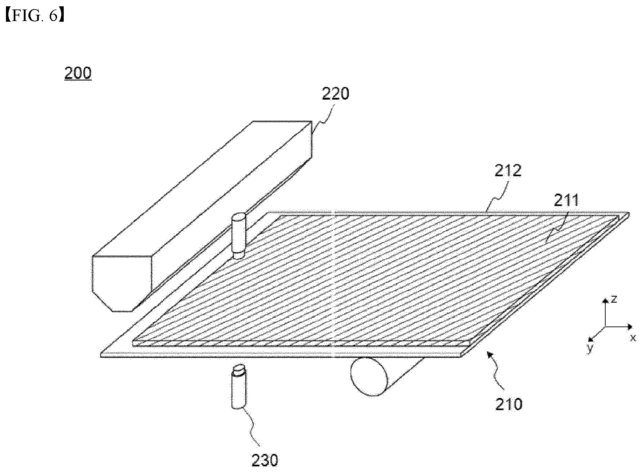

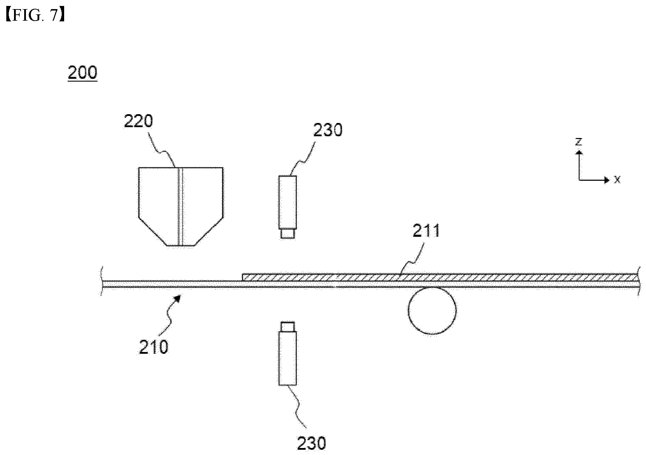

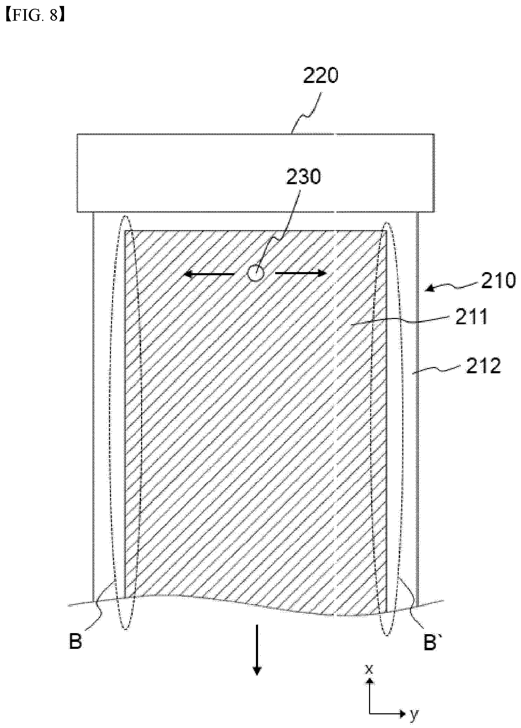

FIGS. 6 to 8 are schematic diagrams illustrating an electrode coating apparatus according to the present disclosure. FIG. 7 is a side view of FIG. 6, and FIG. 8 is a top view of FIG. 6.

When referring to FIGS. 6 to 8 together with FIG. 2, an electrode coating apparatus 200 according to the present disclosure includes a coating die 220 for coating an electrode slurry on one surface of a current collector 210. The coating die 220 may be positioned to be spaced apart from the current collector 210 by a predetermined distance. The coating die 220 may consecutively coat an electrode slurry on the current collector 210 as will be described later.

The coating die 220 may include a main body and a tip coupled to the main body. Specifically, a discharge path, on which the supplied electrode slurry may be moved, may be formed at the main body, and a discharge port, through which the electrode slurry is discharged, may be formed in the end of the tip. The discharge port may have a slit shape extended in the width direction along the end of the tip, and the thickness may be adjusted according to the thickness of the electrode slurry coated on the current collector. Further, the electrode slurry is stored in a separate slurry supply tank (not shown), and the electrode slurry may be supplied to the coating die through a supply pipe (not shown) connected to the coating die.

If a coating process is started in a state that the current collector 210 is wound on a separate unwinding roll (not shown), the electrode slurry is coated while moving along a predetermined path.

The thickness measuring sensor 230 is positioned to be spaced apart from the current collector 210 by a predetermined distance and measures the thickness of the coated electrode slurry (coated part) in real time. Particularly, the thickness measuring sensor 230 recognizes the difference in the thickness of the edge portion by measuring the edge portion of the coated electrode slurry (coated part) and comparing it with the central portion where the thickness is constantly maintained.

At this time, the coating die 220 may consecutively coat an electrode slurry on the current collector 210. In this case, the coating die 220 does not stop the discharge of the electrode slurry during the movement of the current collector 210. Likewise, as the coating die 220 consecutively coats the electrode slurry, the coated part 211, on which an electrode slurry has been coated along the coating direction, is consecutively formed on the current collector 210. The non-coated part 212 may be formed at a portion adjacent to the coated part in a width direction. Namely, in such a case, a balcony portion is not formed except for the coating start point and the coating end point. Hence, in this case, the thickness measuring sensor 230 measures the thickness of both edge portions (Fat Edge, B and B') in the width direction of the coated part 211.

In the present invention, a non-coated part 212 is formed at both ends in the width direction of the current collector 210 for formation of an electrode tab. Namely, the non-coated part 212 is also consecutively extended in the coating direction as the electrode slurry is consecutively coated. The thickness measuring sensor 230 measures a thickness of both edge portions (B) in a width direction of the coated part 211 while reciprocating in the width direction. Specifically, referring to FIG. 8, if the thickness measuring sensor 230 is moved to the left and reaches the edge portion in the width direction of the coated part 211 in a state that the current collector 210 is moving, the thickness is measured, and the thickness measuring sensor 230 is then moved to the right and reaches the edge portion B' at the opposite side of the coated part 211 to thereby measure the thickness. The thickness measuring sensor 230 measures the thickness by repeating the cycle during the movement of the current collector 210. Likewise, as the thickness measuring sensor 230 reciprocates in the width direction, the thickness measuring sensor 230 shows the path in the zigzag form based on the current collector 210.

Likewise, in the present invention, the thickness measuring sensor is not positioned at each of both ends in the width direction of the coated electrode slurry, and the thickness measuring sensor may measure a thickness of both edge portions in a width direction of the coated electrode slurry while reciprocating in the width direction in order to prevent interference between thickness measuring sensors.

Further, there is no particular limitation on the type of the thickness measuring sensor as long as it can measure the thickness of the electrode slurry coated on the current collector. For example, the thickness measuring sensor may be a confocal sensor.

The confocal sensor may detect light generated by fluorescence very close to the measurement object on the focal plane.

Specifically, the confocal sensor is optically focused on the measurement object of the electrode slurry. Thereafter, the light from the laser is converged through the object lens of the confocal sensor and is incident on the optical focal point of the measurement object portion. At this time, the scattering light scattered in the measurement object portion exposed to light from the laser again pass through the object lens, and only accurately focused light is separated through the aperture. The spectrum of light passing through the aperture is digitally signaled in the detector, which is then analyzed by wavelengths to thereby measure the thickness of the electrode slurry.

Since such a confocal sensor disperses the light source and the array according to the wavelength of the color is converted into the distance, the thickness of the electrode slurry can be accurately measured. Further, since the thickness of the electrode slurry is measured using light, the thickness of the desired portion can be accurately measured even if the current collector is moved in a high speed as compared to other measurement methods such as eddy current.

Likewise, when the thickness of the electrode slurry is measured, the thickness measurement result is transmitted to the controller. The controller controls the coated amount of the electrode slurry in real time by reflecting the thickness measurement result. There is no particular limitation on the method of controlling the coated amount of the electrode slurry, but it is possible to install a valve which directly adjusts the flow rate of the electrode slurry to the slurry supply pipe, through which an electrode slurry is supplied to the coating die, and control the opening and closing level of the valve. **In** this case, since the coated amount may be intuitively controlled, the thickness may be easily adjusted. Further, the slurry supply pipe has a plurality of branches in order to adjust the coated amount according to the width direction, and the valve may be installed for each branch. **In** this case, each valve may independently operate to control the coated amount of the electrode slurry. For example, when the thickness in the width direction of the edge portion is greater than that of other portions, it is possible to reduce the amount of slurry supplied to the edge portion in the width direction by closing the nozzle of the portion to which the slurry is supplied.

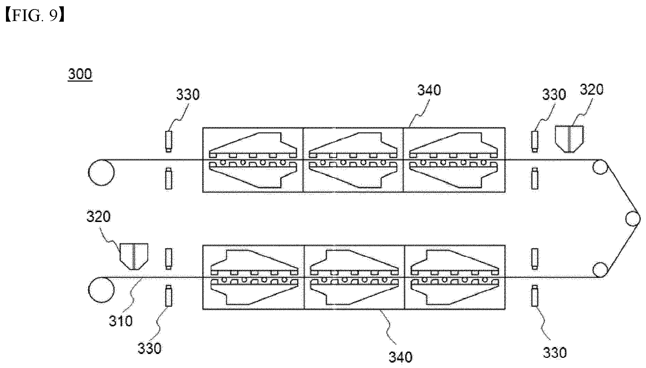

FIG. 9 is a schematic diagram illustrating an electrode coating apparatus according to another embodiment of the present invention.

Referring to FIG. 9, an electrode coating apparatus 300 further includes a drying unit 340 which dries a coated electrode slurry.

The drying unit 340 has a chamber shape where a space for drying an electrode slurry (not shown) coated on the current collector 310 is formed and includes a heat source for drying the electrode slurry. For example, the drying unit 340 may be an oven. Further, the heat source may be a hot air nozzle or an infrared heater. The heat source can be arranged at regular intervals along a transfer direction of the current collector 310, and hot air or infrared ray may be supplied in a direction perpendicular to the current collector 310. Further, the drying unit 340 may be divided into a plurality of drying zones.

The hot air nozzle includes a main body unit and an injection unit. The main body unit constitutes the body of the hot air nozzle, and fixes the hot air nozzle to the ceiling of the oven. In addition, the main body unit is empty inside and transmits hot air transmitted from a hot air supply source (not shown) to the injection unit. On the other hand, the injection unit is provided on the lower surface of the main body unit. The injection unit communicates with the main body unit, and an injection hole portion through which hot air is injected is formed on the lower surface of the injection unit. The injection hole portion may have a structure in which a plurality of pores are arranged at regular intervals.

Further, the infrared heater may include an infrared lamp that irradiates infrared rays to the electrode and a cradle that supports or mounts the infrared lamp. The shape of the infrared lamp is not particularly limited, and for example, the rod-shaped lamp may be arranged in parallel along the transfer direction of the electrode while extending in the width direction of the electrode. Details about other drying units are known to those of ordinary skill in the art, and thus the detailed description thereof is omitted here.

Referring to FIG. 9, the current collector 310, where an electrode slurry has been coated on one surface, enters into the drying unit 340 and is then dried. Thereafter, after one dried surface is turned upside down toward the ground, an electrode slurry is coated on the opposite surface of the surface, where an electrode slurry has been applied, is then dried. This is to prevent the coated electrode slurry from flowing down by gravity.

At this time, the thickness measuring sensor 330 is positioned at a coating start point and an exit point of the drying unit 340. In FIG. 9, since the coating and drying of the electrode slurry are performed twice on one surface and the other surface of the current collector 310, the thickness measuring sensor 330 may also be positioned at each coating start point and the exit point of the drying unit 340, respectively. Namely, the thickness measuring may be performed a total of 4 times. Likewise, it is possible to compare the thickness of the electrode slurry before drying with the thickness of the electrode slurry after drying by measuring the thickness of the electrode slurry right after the coating of the electrode slurry and right after the drying of the electrode slurry.

Further, the present invention provides a method for coating an electrode by using the above described electrode coating apparatus.

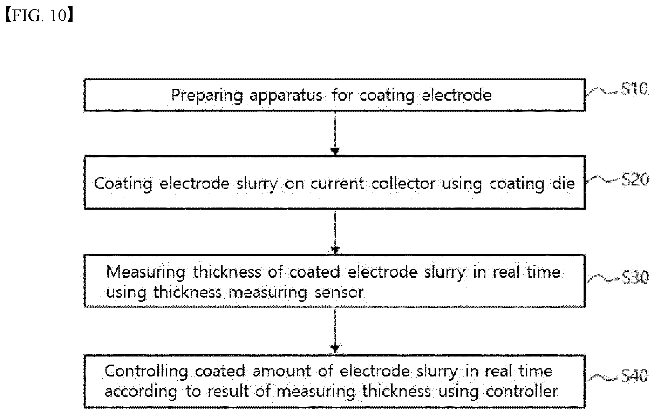

FIG. 10 is a flowchart illustrating the order of an electrode coating method according to the present invention.

Referring to FIG. 10, an electrode coating method according to the present invention includes: preparing the above-described electrode coating apparatus (S10); coating an electrode slurry on a current collector using a coating die (S20); measuring a thickness of the coated electrode slurry in real time using a thickness measuring sensor (S30); and controlling a coated amount of the electrode slurry in real time according to a result of measuring the thickness using a controller (S40).

First, an electrode slurry containing an electrode active material is coated on a current collector. The configuration about the current collector and the electrode slurry has already been described above.

When the electrode slurry is applied, the thickness of the coated electrode slurry is measured using the thickness measuring sensor. At this time, the thickness measuring sensor measures the thickness of the edge portion of the coated electrode slurry (coated part).

At this time, when the electrode slurry is pattern-coated to allow a non-coated part and a coated part to be alternately formed along a coating direction, the thickness measuring sensor is fixed at a central portion in a width direction of the current collector and measures a thickness of a balcony portion which repeatedly shown according to movement of the current collector. The details about the balcony portion are described above. **In** this process, it is possible to recognize the difference between the thickness of the balcony portion and the thickness of the center portion of the coated electrode slurry.

Further, when the electrode slurry is consecutively coated along the coating direction, a balcony portion is not formed. At this time, the thickness measuring sensor measures the thickness of both edge portions in a width direction of the coated electrode slurry (coated part) while reciprocating in the width direction. **In** this process, it is possible to recognize the difference between the thickness of the center portion in the width direction and the thicknessof the edge portion in the width direction.

When the thickness of the coated electrode slurry is measured, the thickness measurement result is reflected through the controller, thereby controlling the coated amount of the electrode slurry in real time. The coated amount of the electrode slurry can be controlled through adjustment of the discharge pressure of the coating die, and, for example, may be controlled through the opening and closing of the valve installed at the pipe through which a slurry is supplied.

Further, the electrode coating method according to the present invention includes drying an electrode slurry. At this time, the measuring of the thickness may be performed right after coating the electrode slurry or right after drying the electrode slurry.

Likewise, according to the present invention, it is possible to recognize the thickness distribution of the electrode slurry in real time by measuring the thickness of the edge portion of the coated electrode slurry using the thickness measuring sensor on the transferred current collector, and accordingly, the thickness of the electrode slurry can be formed to be constant by adjusting the coated amount of the electrode slurry in real time.

### Example 1

85wt% of graphite and 9.5wt% of SiO as the negative electrode active material, 1.4wt% of Denka black as the conductive material, 3.0wt% of SBR as the binder, and 1.1wt% of CMC as the thickener were added to water to thereby prepare a negative electrode slurry.

The negative electrode slurry was coated on a copper current collector having a thickness of 8*µ*m using an electrode coating apparatus including a coating die, a thickness measuring sensor and a drying unit as shown in FIGS. 3 and 9. Specifically, the negative electrode slurry was coated on the current collector to allow a non-coated part and a coated part to be alternately formed.

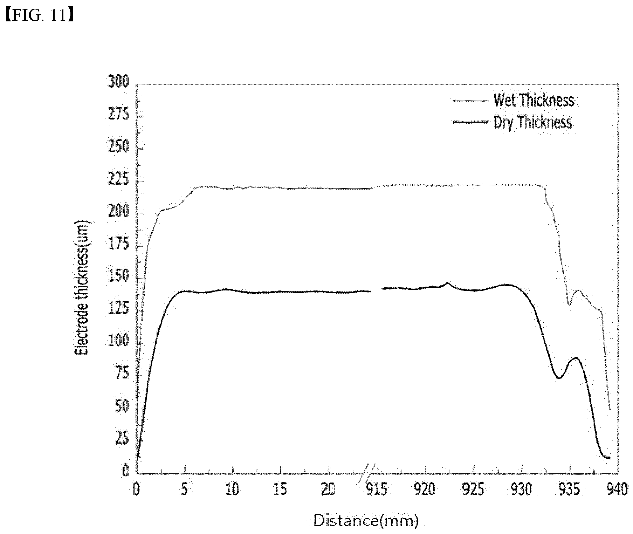

At this time, the thickness of the negative electrode slurry (coated part) in the coating direction was measured while moving the current collector in a state that allows the thickness measuring sensor to be positioned at the center in the width direction of the current collector. The thickness of the negative electrode slurry was measured one time right after the coating process and right after the drying process, respectively. At this time, the thickness of the negative electrode slurry was measured using a confocal sensor. A known sensor such as Confocal DT of KAIS company may be used as the confocal sensor. The results are shown in FIG. 11. In FIG. 11, the horizontal axis represents the distance between the thickness measurement point and the original point based on the assumption that the coating start point is the original point, and the vertical axis represents the thickness of the coated electrode slurry at the measurement point. Further, the wet thickness means the thickness of a slurry right after coated by a coating die, and the dry thickness means the thickness after the drying process.

### Example 2

85wt% of graphite and 9.5wt% of SiO as the negative electrode active material, 1.4wt% of Denka black as the conductive material, 3.0wt% of SBR as the binder, and 1.1wt% of CMC as the thickener were added to water to thereby prepare a negative electrode slurry.

The negative electrode slurry was coated on a copper current collector having a thickness of 8*µ*m using an electrode coating apparatus including a coating die, a thickness measuring sensor and a drying unit as shown in FIGS. 6 and 9. Specifically, the negative electrode slurry was consecutively coated on the current collector using a coating die.

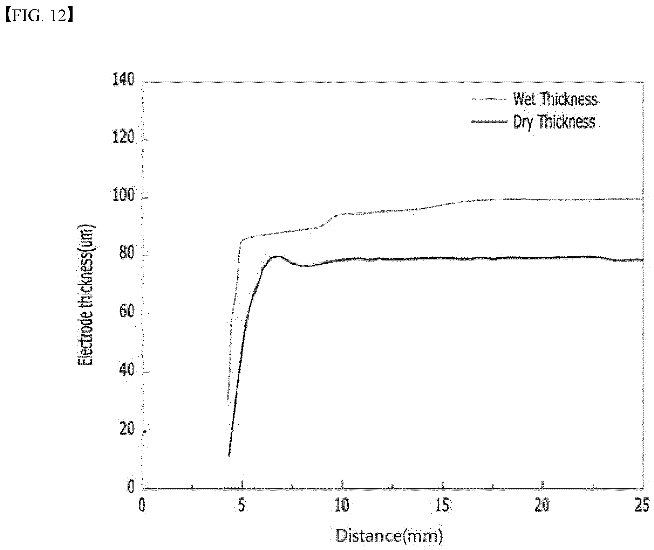

At this time, the thickness in the width direction of the negative electrode slurry was measured while the thickness measuring sensor is reciprocated in the width direction of the current collector. The thickness of the negative electrode slurry was measured one time right after the coating process and right after the drying process, respectively. The results are shown in FIG. 12. In FIG. 12, the horizontal axis represents the distance between the measurement point and the original point based on the assumption that one end in the width direction of the current collector is the original point, and the vertical axis represents the thickness of the coated electrode slurry at the measurement point. Further, the wet thickness means the thickness of a slurry right after coated by a coating die, and the dry thickness means the thickness after the drying process.

Referring to FIGS. 11 and 12, the electrode coating apparatus according to the present invention can measure the thickness of the coated slurry in real time.

Specifically, referring to FIG. 11, a peak is shown at the edge portion (balcony portion) in the coating direction of the coated electrode slurry (coated part). Likewise, referring to FIG. 12, a peak is shown at the edge portion in the width direction of the coated electrode slurry (coated part). Likewise, according to the present invention, it is possible to recognize the thickness distribution of the electrode slurry in real time by measuring the thickness of the edge portion of the coated electrode slurry using the thickness measuring sensor, and accordingly, the thickness of the electrode can be formed to be constant by adjusting the thickness of the electrode slurry in real time.

Further, according to the present invention, it is possible to compare the thickness of the electrode slurry before drying with the thickness of the electrode slurry after drying by measuring the thickness of the electrode slurry right after the coating of the electrode slurry and right after the drying of the electrode slurry.

The above description is merely illustrative of the technical idea of the present invention, and those skilled in the art to which the present invention pertains may make various modifications and variations without departing from the essential characteristics of the present invention. Therefore, the drawings disclosed in the present invention are not intended to limit the technical idea of the present invention but to describe the present invention, and the scope of the technical idea of the present invention is not limited by these drawings. The scope of protection of the present invention should be interpreted by the following claims.

On the other hand, in this specification, terms indicating directions such as up, down, left, right, before, and after are used, but it is obvious that these terms are for convenience of description only and may change depending on the location of the object or the location of the observer.

### <Description of reference numerals>

1, 100, 200, 300: electrode coating apparatus
10, 110, 210, 310: current collector
11, 111, 211: coated part
12, 112, 212: non-coated part
20, 120, 220, 320: coating die
130, 230, 330: thickness measuring sensor
140: controller
340: drying unit

## Claims

1. An electrode coating apparatus, the apparatus comprising:
a coating die (120) configured to coat an electrode slurry on one surface of a current collector;
a thickness measuring sensor (130) positioned to be spaced apart from the current collector by a predetermined interval and configured to measure a thickness of the coated electrode slurry in real time; and
a controller (140) configured to control a coated amount of the electrode slurry in real time according to a result of measuring the thickness,
wherein the thickness measuring sensor (130) measures both a thickness of a balcony portion and a thickness of a central portion of the coated electrode slurry, and recognizes the difference in the thickness of the balcony portion by comparing the thickness of the edge portion with the thickness of the central portion,
the coating die (120) is configured to pattern-coat the electrode slurry to allow a non-coated part and a coated part to be alternately formed along a coating direction,
**characterised in that**,
the thickness measuring sensor is a confocal sensor,
the thickness measuring sensor (130) is fixed at a central portion in a width direction of the current collector and is configured to measure a thickness of both balcony portions, and
the confocal sensor is configured to disperse the light source into colors and to convert the array according to the wavelength of the colors into distance.

2. The electrode coating apparatus of claim 1, further comprising a drying unit (340) configured to dry the coated electrode slurry.

3. The electrode coating apparatus of claim 2, wherein two thickness measuring sensors (130) are provided and are positioned at a coating start point and an exit point of the drying unit (340) respectively.

4. The electrode coating apparatus of claim 1, wherein the controller is configured to control a discharge pressure of the coating die.

5. An electrode coating method, the method comprising:
preparing an electrode coating apparatus according to claim 1;
coating an electrode slurry on a current collector using a coating die (120);
measuring a thickness of the coated electrode slurry in real time using a thickness measuring sensor (130); and
controlling a coated amount of the electrode slurry in real time according to a result of measuring the thickness using a controller (140),
wherein the thickness measuring sensor (130) measures both a thickness of a balcony portion and a thickness of a central portion of the coated electrode slurry, and recognizes the difference in the thickness of the balcony portion by comparing the thickness of the balcony portion with the thickness of the central portion,
thickness measuring sensor (130) is a confocal sensor,
the electrode slurry is pattern-coated to allow a non-coated part and a coated part to be alternately formed along a coating direction, and
the thickness measuring sensor (130) is fixed at a central portion in a width direction of the current collector and measures a thickness of a balcony portion which repeatedly shown according to movement of the current collector.

6. The electrode coating method of claim 5, wherein the coated amount of the electrode slurry is controlled by adjustment of a discharge pressure of the coating die (120).

## Patentansprüche

1. Elektrodenbeschichtungsvorrichtung, wobei die Vorrichtung umfasst:
eine Beschichtungsdüse (120), welche dazu eingerichtet ist, eine Fläche eines Stromkollektors mit einer Elektrodenpaste zu beschichten;
einen Dickenmesssensor (130), welcher positioniert ist, um um einen vorbestimmten Abstand von dem Stromkollektor beabstandet zu sein, und welcher dazu eingerichtet ist, eine Dicke der beschichteten Elektrodenpaste in Echtzeit zu messen; und
eine Steuereinheit (140), welche dazu eingerichtet ist, eine Beschichtungsmenge der Elektrodenpaste gemäß einem Ergebnis eines Messens der Dicke in Echtzeit zu steuern,
wobei der Dickenmesssensor (130) sowohl eine Dicke eines Balkonabschnitts als auch eine Dicke eines zentralen Abschnitts der beschichteten Elektrodenpaste misst und die Differenz der Dicke des Balkonabschnitts durch ein Vergleichen der Dicke des Randabschnitts mit der Dicke des zentralen Abschnitts erkennt,
wobei die Beschichtungsdüse (120) dazu eingerichtet ist, die Elektrodenpaste mit einem Muster zu beschichten, um es einem unbeschichteten Teil und einem beschichteten Teil zu ermöglichen, entlang einer Beschichtungsrichtung alternierend gebildet zu sein,
**dadurch gekennzeichnet, dass** der Dickenmesssensor ein konfokaler Sensor ist,
wobei der Dickenmesssensor (130) in einer Breitenrichtung des Stromkollektors an einem zentralen Abschnitt fixiert ist und dazu eingerichtet ist, eine Dicke beider Balkonabschnitte zu messen, und
wobei der konfokale Sensor dazu eingerichtet ist, die Lichtquelle in Farben aufzuteilen und das Array gemäß der Wellenlänge der Farben in eine Distanz umzuwandeln.

2. Elektrodenbeschichtungsvorrichtung nach Anspruch 1, ferner umfassend eine Trocknungseinheit (340), welche dazu eingerichtet ist, die beschichtete Elektrodenpaste zu trocknen.

3. Elektrodenbeschichtungsvorrichtung nach Anspruch 2, wobei zwei Dickenmesssensoren (130) bereitgestellt sind und jeweils an einem Beschichtungsstartpunkt und einem Endpunkt der Trocknungseinheit (340) positioniert sind.

4. Elektrodenbeschichtungsvorrichtung nach Anspruch 1, wobei die Steuereinheit dazu eingerichtet ist, einen Abgabedruck der Beschichtungsdüse zu steuern.

5. Elektrodenbeschichtungsverfahren, wobei das Verfahren umfasst:
Vorbereiten einer Elektrodenbeschichtungsvorrichtung nach Anspruch 1;
Beschichten einer Elektrodenpaste auf einen Stromkollektor unter Verwendung einer Beschichtungsdüse (120);
Messen einer Dicke der beschichteten Elektrodenpaste unter Verwendung eines Dickenmesssensors (130) in Echtzeit; und
Steuern einer Beschichtungsmenge der Elektrodenpaste gemäß einem Ergebnis eines Messens der Dicke unter Verwendung einer Steuereinheit (140) in Echtzeit,
wobei der Dickenmesssensor (130) sowohl eine Dicke eines Balkonabschnitts als auch eine Dicke eines zentralen Abschnitts der beschichteten Elektrodenpaste misst und die Differenz der Dicke des Balkonabschnitts durch ein Vergleichen der Dicke des Balkonabschnitts mit der Dicke des zentralen Abschnitts erkennt,
wobei der Dickenmesssensor (130) ein konfokaler Sensor ist,
wobei die Elektrodenpaste mit einem Muster beschichtet wird, um es einem unbeschichteten Teil und einem beschichteten Teil zu ermöglichen, entlang einer Beschichtungsrichtung alternierend gebildet zu werden, und
wobei der Dickenmesssensor (130) in einer Breitenrichtung des Stromkollektors an einem zentralen Abschnitt fixiert ist und eine Dicke eines Balkonabschnitts misst, welcher gemäß einer Bewegung des Stromkollektors wiederholend gezeigt wird.

6. Elektrodenbeschichtungsverfahren nach Anspruch 5, wobei die Beschichtungsmenge der Elektrodenpaste durch Anpassung eines Abgabedrucks der Beschichtungsdüse (120) gesteuert wird.

## Revendications

1. Appareil d'enduction d'électrode, l'appareil comprenant :
une filière d'enduction (120) configurée pour appliquer une suspension d'électrode sur une surface d'un collecteur de courant ;
un capteur de mesure d'épaisseur (130) positionné pour être espacé du collecteur de courant d'un intervalle prédéterminé et configuré pour mesurer une épaisseur de la suspension d'électrode appliquée en temps réel ; et
un dispositif de commande (140) configuré pour commander une quantité appliquée de la suspension d'électrode en temps réel selon un résultat de mesure de l'épaisseur, dans lequel le capteur de mesure d'épaisseur (130) mesure à la fois une épaisseur d'une partie de type balcon et une épaisseur d'une partie centrale de la suspension d'électrode appliquée, et reconnaît la différence d'épaisseur de la partie de type balcon en comparant l'épaisseur de la partie de bord à l'épaisseur de la partie centrale,
la filière d'enduction (120) est configurée pour appliquer la suspension d'électrode selon un motif pour permettre la formation alternée d'une partie non enduite et d'une partie enduite selon une direction d'enduction, **caractérisé en ce que**,
le capteur de mesure d'épaisseur est un capteur confocal,
le capteur de mesure d'épaisseur (130) est fixé au niveau d'une partie centrale dans une direction de largeur du collecteur de courant et est configuré pour mesurer une épaisseur des deux parties de type balcon, et
le capteur confocal est configuré pour disperser la source de lumière en couleurs et pour convertir le réseau selon la longueur d'onde des couleurs en distance.

2. Appareil d'enduction d'électrode selon la revendication 1, comprenant en outre une unité de séchage (340) configurée pour sécher la suspension d'électrode appliquée.

3. Appareil d'enduction d'électrode selon la revendication 2, dans lequel deux capteurs de mesure d'épaisseur (130) sont prévus et sont positionnés respectivement à un point de départ d'enduction et à un point de sortie de l'unité de séchage (340).

4. Appareil d'enduction d'électrode selon la revendication 1, dans lequel le dispositif de commande est configuré pour commander une pression de décharge de la filière d'enduction.

5. Procédé d'enduction d'électrode, le procédé comprenant :
la préparation d'un appareil d'enduction d'électrode selon la revendication 1 ;
l'application d'une suspension d'électrode sur un collecteur de courant à l'aide d'une filière d'enduction (120) ;
la mesure en temps réel d'une épaisseur de la suspension d'électrode appliquée à l'aide d'un capteur de mesure d'épaisseur (130) ; et
la commande en temps réel d'une quantité appliquée de la suspension d'électrode selon un résultat de mesure d'épaisseur à l'aide d'un dispositif de commande (140),
dans lequel le capteur de mesure d'épaisseur (130) mesure à la fois une épaisseur d'une partie de type balcon et une épaisseur d'une partie centrale de la suspension d'électrode appliquée, et reconnaît la différence d'épaisseur de la partie de type balcon en comparant l'épaisseur de la partie de type balcon à l'épaisseur de la partie centrale,
le capteur de mesure d'épaisseur (130) est un capteur confocal,
la suspension d'électrode est appliquée selon un motif pour permettre la formation alternée d'une partie non enduite et d'une partie enduite le long d'une direction d'enduction, et
le capteur de mesure d'épaisseur (130) est fixé à une partie centrale dans une direction de largeur du collecteur de courant et mesure une épaisseur d'une partie de type balcon qui apparaît de manière répétée selon le mouvement du collecteur de courant.

6. Procédé d'enduction d'électrode selon la revendication 5, dans lequel la quantité appliquée de la suspension d'électrode est commandée par le réglage d'une pression de décharge de la filière d'enduction (120).
